# EUROPEAN PATENT APPLICATION

(11) **EP 2 876 650 A1**
(43) Date of publication of application: **27.05.2015**
(21) Application number: 14192616.2
(22) Date of filing: 11.11.2014
(51) Int. Cl.: H01B 3/28, H01B 3/46, H01B 7/28, H01B 17/42

(54) **Outer covering rubber for polymer insulator**

(30) Priority: 21.11.2013 JP 2013240865
(71) Applicant: NGK Insulators, Ltd., Nagoya-shi, Aichi 467-8530 (JP); Kyushu Institute of Technology, Kitakyushu-shi, Fukuoka 804-8550 (JP)
(72) Inventor: Hikita, Masayuki, Kitakyushu-shi, Fukuoka 804-8550 (JP); Kozako, Masahiro, Kitakyushu-shi, Fukuoka 804-8550 (JP); Kondo, Takanori, Nagoya-shi, Aichi 467-8530 (JP); Inoue, Ryo, Nagoya-shi, Aichi 467-8530 (JP)
(74) Representative: TBK

(57) **Abstract**

An object is to provide a technique for manufacturing an outer covering rubber having high-voltage electrical insulation characteristics and mechanical characteristics, which are required for a polymer insulator, by decreasing an amount of an additive conducive to improvement in high-voltage electrical insulation characteristics to less than conventional 3% by mass, without using special additional equipment such as ultrasonic agitation. Provided is an outer covering rubber for a polymer insulator, which is obtained by adding an additive conducive to improvement in high-voltage electrical insulation characteristics to a rubber composition, and the additive is a fine powder obtained by crushing a ceramic hydrate into a particle size of 100 nm or less, and the amount of the additive is 0.5 to 2.5% by mass in the entire raw materials of the outer covering rubber for a polymer insulator.

## Description

### BACKGROUND OF THE INVENTION

### Field of the invention

The present invention relates to an outer covering rubber for a polymer insulator.

### Description of the Related Art

A polymer insulator is constituted with an insulating rod made of glass fiber reinforced plastics (FRP) and the like, an outer covering rubber formed by molding on the periphery of the insulating rod, and holding metal fittings fixed by caulking to both ends of the insulating rod, and is lightweight and has high strength. Therefore, it has been used in various applications required to have these characteristics.

An outer covering rubber that constitutes a polymer insulator is desired to be excellent in high-voltage electrical insulation characteristics such as tracking resistance, arc resistance and erosion resistance, and various additives conducive to improvement in high-voltage electrical insulation characteristics have been studied.

For example, a technique of using a large amount of aluminum hydroxide as an additive, (Patent Document 1) and a technique of using silica (SiO₂) with a nano-size as an additive (Non-patent Documents 1 and 2) have been disclosed.

The technique in Patent Document 1 is intended to improve high-voltage electrical insulation characteristics such as tracking resistance, arc resistance, and erosion resistance by adding 100 to 900 parts by weight of a combination of aluminum hydroxide with a particle diameter of 7 to 50 µm and aluminum hydroxide with a particle diameter of 0.1 to 7 µm with respect to 100 parts by weight of a rubber composition. On the other hand, this technique has a problem that addition of a large amount of aluminum hydroxide decreases mechanical characteristics of a rubber such as reductions in viscosity of the rubber and in tear strength of the rubber after vulcanization.

Non-Patent Documents 1 and 2 are based on studies conducted by the present inventors and disclose data which shows actual improvements in both high-voltage electrical insulation characteristics and mechanical characteristics of a rubber due to addition of silica (SiO₂) with a particle diameter of 7 nm or 40 nm. However, silica with the above described size cannot be sufficiently dispersed in a rubber if stirred only by a general planetary centrifugal mixer, so that addition of ultrasonic agitation is necessary and these techniques thus have a problem that the rubber cannot be manufactured using conventional facilities.

In addition, it is preferred that an adding amount of an additive in a step of manufacturing an outer covering rubber of a polymer insulator is small from the viewpoint of a cost of raw materials. In the techniques of Non-Patent Documents 1 and 2, however, a required amount of silica (SiO₂) with the above described size is at least 3 to 5% by mass in order to have high-voltage electrical insulation characteristics and mechanical characteristics, which are necessary as a polymer insulator, and the techniques have a problem that the adding amount of silica cannot be further reduced.

### Related Arts Documents

### Patent Document

Patent Document 1: Japanese Patent No. 3360264
Non-patent Documents

Non-patent Document 1: Technical Committee on Dielectrics and Electrical Insulation, The Institute of Electrical Engineers of Japan, DEI-12-104, 2012

Non-patent Document 2: 2013 IEEE International Conference on Solid Dielectrics POST-02:19

### SUMMARY OF THE INVENTION

An object of the present invention is to solve the above described problems and to provide a technique of manufacturing an outer covering rubber having high-voltage electrical insulation characteristics and mechanical characteristics, which are required for a polymer insulator, by decreasing an amount of an additive conducive to improvement in high-voltage electrical insulation characteristics to less than conventional 3% by mass, without using special additional equipment such as ultrasonic agitation.

The outer covering rubber for a polymer insulator of the present invention, which was made for solving the above described problems, is an outer covering rubber for a polymer insulator obtained by adding an additive conducive to improvement in high-voltage electrical insulation characteristics to a rubber composition, and the additive is a fine powder obtained by crushing a ceramic hydrate into a particle size of 100 nm or less, and the amount of the additive is less than 0.5 to 2.5% by mass in the entire raw materials of the outer covering rubber for a polymer insulator. The particle diameter of the additive according to the present specification is defined to be a value found by a particle size distribution measurement using a "laser diffraction method".

The invention according to claim 2 is the outer covering rubber for a polymer insulator according to claim 1, and the ceramic is aluminum oxide.

The invention according to claim 3 is the outer covering rubber for a polymer insulator according to claim 1, and the ceramic hydrate is Al₂O₃·H₂O.

### Effect of the Invention

In the present invention, a fine powder obtained by crushing a ceramic hydrate into a particle size of 100 nm or less is used as an additive for an outer covering rubber for a polymer insulator. As described above, an additive obtained from a ceramic hydrate formed into a nano-size is excellent in dispersibility into the entire raw materials of the outer covering rubber for a polymer insulator and therefore can be dispersed into the entire raw materials by being stirred by a general planetary centrifugal mixer without using special additional equipment such as ultrasonic agitation.

Furthermore, as described above, an additive obtained by forming a ceramic hydrate into a nano-size has a very large interfacial region between the additive and a rubber composition, and therefore, a minimal adding amount such as 0.5% by mass (1/6 of the adding amount which was disclosed as a best mode value in Non-patent Documents 1 and 2) allows an outer covering rubber for a polymer insulator to be provided with high-voltage electrical insulation characteristics equal to those in conventional Non-patent Documents 1 and 2 and, at the same time, more excellent mechanical characteristics as compared to those in conventional Non-patent Documents 1 and 2. The detailed mechanism thereof has not been revealed, but the present inventors presume that these effects are achieved because interaction working in an interfacial region between nano-size particles or crystal water and a base rubber is more strongly expressed due to increase of the interfacial region.

### DETAILED DESCRIPTION OF THE PREFERRED EMBODIMENTS

Hereinbelow, preferred embodiments of the present invention will be described.

In the present embodiment, an addition reaction curing type liquid silicone rubber composition (manufactured by Momentive Performance Materials Inc.) was used as a base rubber, and a fine powder obtained by crushing boehmite (Al₂O₃·H₂O) into a particle size of 100 nm or less (manufactured by TAIMEI CHEMICALS CO., LTD. or KANTO DENKA KOGYO CO., LTD.) was used as an additive. Stirring of the additive was carried out only by a planetary centrifugal mixer.

The addition reaction curing type liquid silicone rubber composition refers to a silicone rubber composition for a high-voltage electrical insulator, which contains the following components (a) to (c) as main components.
(a) 100 parts by weight of organopolysiloxane whose average composition formula is expressed by R¹ₐSiO_{(4-a)/2}, which has at least two or more alkenyl groups on average in one molecule (in the formula, R¹ is a substituted or nonsubstituted monovalent hydrocarbon group, and 0.01 to 20% by mol of R¹ are alkenyl groups; and a is an integer from 1.9 to 2.4.)
(b) 0.1 to 100 parts by weight of organohydrogen polysiloxane whose average composition formula is expressed by R²_{b}H_{c}SiO_{(4-b-c)/2}, which is liquid at normal temperature (in the 2 formula, R is a substituted or nonsubstituted monovalent hydrocarbon group having 1 to 10 carbon atoms, b is an integer satisfying 0.7 to 2.1, and preferably 1 to 2, c is an integer satisfying 0.002 to 1, and preferably 0.01 to 0.5, and b+c is an integer satisfying 0.8 to 3, and preferably 1.5 to 2.6.)
(c) Addition reaction catalyst in a catalytic amount of (1 to 100 ppm) .

Two types of boehmite (Al₂O₃·H₂O) were used: one is boehmite having an average particle diameter (median diameter) of 70 nm and a plate crystal structure and the other is boehmite having an average particle diameter (median diameter) of 100 nm and an orthorhombic crystal structure.

A method for molding the outer covering rubber for a polymer insulator of the present invention can be freely selected according to a viscosity of a mixture, and any method such as infusion molding, compression molding, injection molding, extrusion molding, and transfer molding may be adopted. For the curing condition, a mixture can be heated generally at 80 to 200°C for 3 minutes to 3 hours.

### Examples

A sample composed only of a base rubber without addition of an additive (Comparative Example 1) and samples that are obtained by addition of additives as in Table 1 below (Examples 1 to 5 and Comparative Examples 2 to 7) were prepared and a tracking resistance test (in accordance with IEC60587, testing conditions: 4.5 kV, 6 hours), an arc resistance test (in accordance with JIS K6911), and a mechanical characteristics test (in accordance with JIS K6251) were carried out. Each of Comparative Examples 2 and 3 is a sample containing an additive obtained by forming the particle size into a µ size and each of Comparative Examples 4 and 5 is a sample in which a kind of an additive is anhydrous silica having no crystal water.

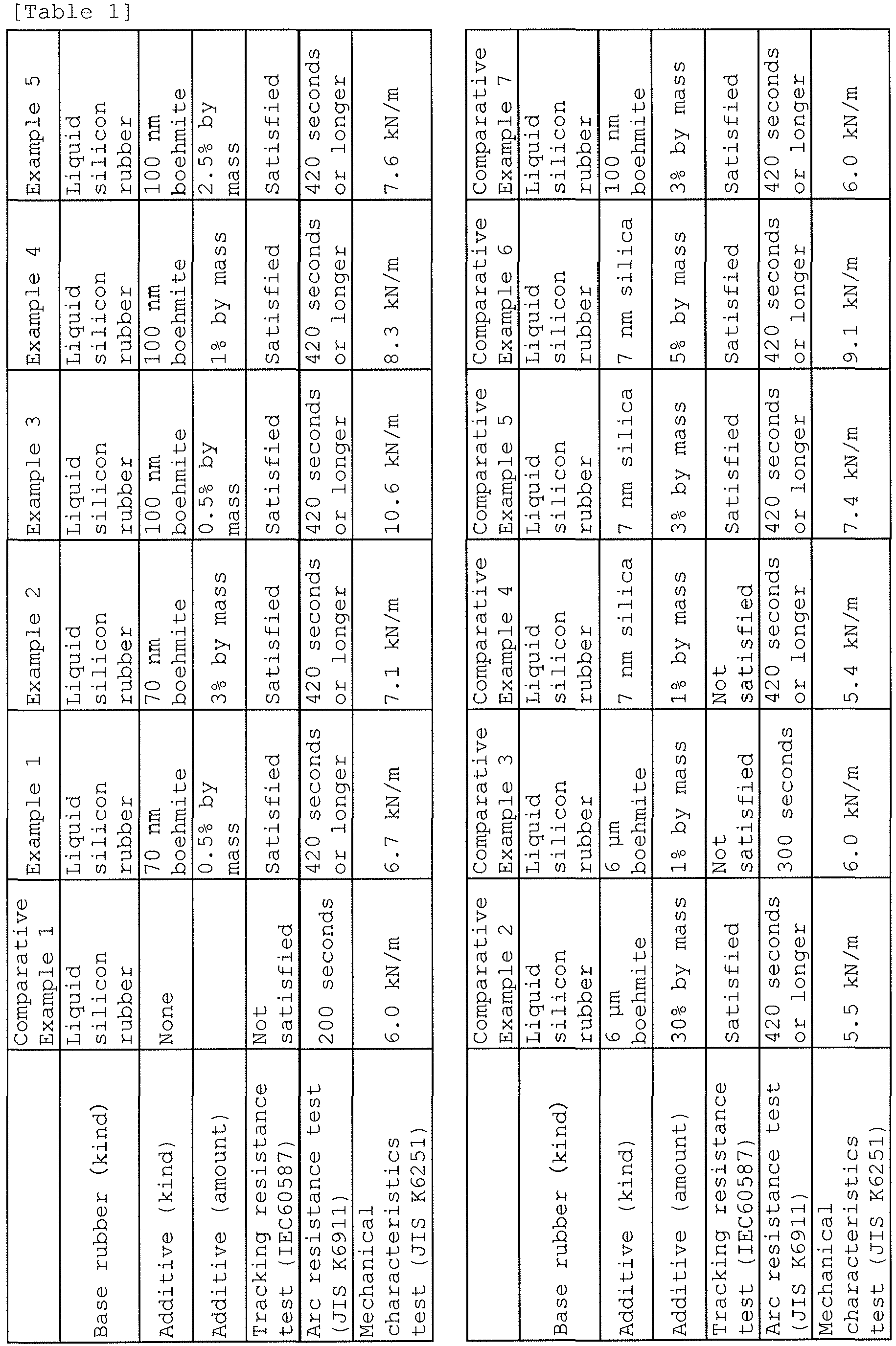

### (Tracking resistance characteristics and erosion resistance characteristics)

Any of Comparative Examples 1, 3 and 4 was not able to satisfy the above described testing conditions, and an erosion depth was 6 mm (=penetration of sample) and an erosion length was 25 mm or more. Any of Examples 1 to 5 and Comparative Examples 2, 5, 6 and 7 satisfied the above described testing conditions, an average erosion depth was suppressed to be 1.5 mm and an average erosion length was suppressed to be 5 to 6 mm.

### (Arc resistance characteristics)

It took 200 seconds and 300 seconds in Comparative Examples 1 and 3, respectively. By contrast, it took 420 seconds or longer, which is the detection limit, in any of Examples 1 to 5 and Comparative Examples 2, 4, 5, 6 and 7, and significant improvement was confirmed as compared to comparative examples.

### (Mechanical characteristics)

In a tear strength test in accordance with JIS K6251, improvement in tear strength was confirmed in any of Examples 1 to 5 as compared to Comparative Example 1. On the other hand, tear strengths in Comparative Examples 2 to 4 and Comparative Example 7 were approximately the same or slightly lower as compared to Comparative Example 1, and an effect of improvement in tear strength was not observed.

According to the above-described results,
· it was confirmed that a fine powder obtained by crushing a ceramic hydrate into a particle size of 100 nm or less is used as an additive and the adding amount is to be 0.5 to 2.5% by mass, thereby enabling an outer covering rubber for a polymer insulator to have high-voltage electrical insulation characteristics equal to those in conventional techniques (Non-patent Documents 1 and 2) and also to have mechanical characteristics more excellent than those in the conventional techniques;
· it was confirmed that when the additive was formed into a µ size, addition of a large amount of the additive can provide high-voltage electrical insulation characteristics that are required for a polymer insulator but decreases mechanical characteristics; and
· it was confirmed that when a kind of the additive was anhydrous silica, an adding amount of the additive was required to be 3% by mass or more in order to provide high-voltage electrical insulation characteristics that are required for a polymer insulator.

An object is to provide a technique for manufacturing an outer covering rubber having high-voltage electrical insulation characteristics and mechanical characteristics, which are required for a polymer insulator, by decreasing an amount of an additive conducive to improvement in high-voltage electrical insulation characteristics to less than conventional 3% by mass, without using special additional equipment such as ultrasonic agitation. Provided is an outer covering rubber for a polymer insulator, which is obtained by adding an additive conducive to improvement in high-voltage electrical insulation characteristics to a rubber composition, and the additive is a fine powder obtained by crushing a ceramic hydrate into a particle size of 100 nm or less, and the amount of the additive is 0.5 to 2.5% by mass in the entire raw materials of the outer covering rubber for a polymer insulator.

## Claims

1. An outer covering rubber for a polymer insulator, which is obtained by adding an additive conducive to improvement in high-voltage electrical insulation characteristics to a rubber composition,
wherein the additive is a fine powder obtained by crushing a ceramic hydrate into a particle size of 100 nm or less, and
the amount of the additive is 0.5 to 2.5% by mass in the entire raw materials of the outer covering rubber for a polymer insulator.

2. The outer covering rubber for a polymer insulator according to claim 1, wherein the ceramic is aluminum oxide.

3. The outer covering rubber for a polymer insulator according to claim 1, wherein the ceramic hydrate is Al₂O₃·H₂O.
